Europäisches Patentamt

European Patent Office

Office européen des brevets

(11) Publication number: **0 135 215**
**B1**

(12) **EUROPEAN PATENT SPECIFICATION**

(45) Date of publication of patent specification: **11.10.89**

(21) Application number: **84201039.9**

(22) Date of filing: **12.07.84**

(51) Int. Cl.⁴: **G 02 B 13/16,** G 02 B 13/18

(54) Projection lens system.

(30) Priority: **25.07.83 GB 8319938**

(43) Date of publication of application:
**27.03.85 Bulletin 85/13**

(45) Publication of the grant of the patent:
**11.10.89 Bulletin 89/41**

(84) Designated Contracting States:
**AT DE FR GB IT SE**

(56) References cited:
**US-A-3 006 248**

(73) Proprietor: **PHILIPS ELECTRONIC AND ASSOCIATED INDUSTRIES LIMITED**
**Philips House 188 Tottenham Court Road London W1P 9LE (GB)**
(84) **GB**

(73) Proprietor: **N.V. Philips' Gloeilampenfabrieken**
**Groenewoudseweg 1**
**NL-5621 BA Eindhoven (NL)**
(84) **DE FR IT SE AT**

(72) Inventor: **Clarke, John Alfred**
**C/O PHILIPS RESEARCH LABORATORIES**
**Redhill Surrey RH1 5HA (GB)**

(74) Representative: **Boxall, Robin John et al**
**PHILIPS ELECTRONICS Patents and Trade Marks Department Centre Point New Oxford Street London WC1A 1QJ (GB)**

Courier Press, Leamington Spa, England.

## Description

This invention relates to projection lenses, and more particularly, relates to lenses designed to project an enlargement of an image on a cathode ray tube (CRT) such as a phosphor screen of a television set.

In three tube colour projection television systems, it is often not necessary to correct the chromatic aberration of each projection lens due to the limited spectral bandwidth of each CRT, thus simplifying lens design to some extent. If a CRT with a flat face plate is used, then a steeply curved field flattener is often necessary adjacent to the face plate to correct Petzval curvature. Such designs are disclosed in U.S. Patent Specification 4,348,081 in which some of the lens elements have aspheric surfaces. In such designs the field flattener has two disadvantages. Firstly, the steep curve of the field flattener at the edges of the picture means that high angles of incidence occur, rendering aberration correction difficult and producing brightness reduction due to light lost by reflection at the steeply curving surface. Secondly, projection CRT's are usually run at high screen loadings in order to produce an adequately bright picture for viewing. In consequence, the phosphor can be raised in temperature and thermal quenching of the phosphor can occur, reducing picture brightness with increasing temperature. If the field flattener is in optical contact with the CRT face plate, the effective thickness of the face plate varies considerably across the picture, being especially thick at the picture edges. Face plate cooling is then not constant over the picture and hence phosphor temperature is not constant over the picture, producing picture brightness variations via thermal quenching. The field flattener may therefore be separated from the face plate and a coolant circulated between them, incurring additional complexity.

In British Patent Application 2,091,898A, the optical problem of the field flattener is largely solved by using a cathode ray tube having a face plate which is concave towards the projection lens. The face plate glass may be strengthened, for example by surface ion exchange, so that it can withstand atmospheric pressure on the concave surface. A single element lens having both surfaces aspherized is used together with a solid prism beam combiner for projecting the images from all three of the CRT's. However, the prism has convex surfaces fitting the concave CRT face plates, rendering cooling difficult.

In United States Patent 3,006,248, a 2 element camera lens is described for use with a concave film plane which could be used in reverse as a projection lens.

It is an object of the invention to simplify beam combining, provide cooling access to face plates of substantially constant thickness and to provide high quality imaging out to the picture edges with a wide aperture lens having a short projection throw.

The invention provides a lens system for projecting an image of a concave object surface onto a planar display screen, the radius of the concave object surface being approximately equal to the focal length of the lens system, characterised in that the projection lens comprises two elements, each of positive power and each having one aspheric surface, the element nearest the screen having meniscus shape and the other element having substantially plano-convex shape, the shorter radius surfaces of each element facing the screen, the powers of the elements being chosen so that

$$0.4K < K_1 < 0.60K \text{ and}$$
$$0.75K < K_2 < 1.05K$$

where $K_1$ is the power of the element remote from the object surface, $K_2$ is the power of the element adjacent the object surface and K is the total power of the projection lens, the ratio of the axial separation of the elements to the lens system focal length being in the range 0.67 to 0.81. Each aspheric surface may be defined by the following relationship:

$$Z = \frac{Cs^2}{1 + \sqrt{1 - \varepsilon C^2 s^2}} + a_4 s^4 + a_6 s^6 + a_8 s^8 + a_{10} s^{10} \ .$$

where Z is the deviation, in the axial direction, of the surface from a plane normal to the optic axis and tangent to the surface at its pole for a zone of the surface which is at a distance s from the axis, C is the curvature of the surface on the axis, $\xi$ is a conic constant, and $a_4$, $a_6$, $a_8$ and $a_{10}$ are constants for the surface.

A lens system in accordance with the invention may be characterised in that the lens system is folded by a plane mirror inserted between the two transmissive elements at an angle to the optical axis.

In projection television sets, the image may be projected onto a translucent screen from the back, the CRT and lens being behind the screen and within a free standing cabinet, the front of which comprises the screen. It is desirable to reduce the depth of the cabinet as much as possible and at least below a value such that the T.V. set can easily pass through ordinary living room doors. Folding mirrors are usually used within the cabinet to reduce the depth. Using a lens in accordance with the invention the number of folding mirrors can be reduced since the projection distance, or throw, from the lens to the screen is reduced and since a wide projection angle is provided so that the projected picture size is maintained. It may be an advantage if the lens itself can be folded. This can be done if sufficient clearance is provided between two adjacent elements of the lens so that a folding mirror can be inserted between them. Using a lens system in accordance with the invention there is provided a projection television system comprising a cathode ray tube having a face plate concave towards the direction of the projected image. Also, using a lens system in accordance with the invention there is provided a colour television projection system comprising first, second and third cathode ray tubes having red, blue and green phosphors respectively provided on concave face plates, a lens system associated with each cathode ray tube, each lens system being arranged to project an image of the concave face plate onto a common display screen.

Embodiments of the invention will now be described, by way of example, with reference to the accompanying drawings, in which:

Figures 1 and 2 show typical layouts of projection television systems to which a lens system in accordance with the invention may be applied,

Figures 3 and 4 show two lens systems in accordance with the invention,

Figures 5 and 6 show the modulation transfer functions and defocus functions of the lens systems of Figures 3 and 4 respectively,

Figure 7 shows a folded lens system, and

Figure 8 shows the performance of the lens system of Figure 7.

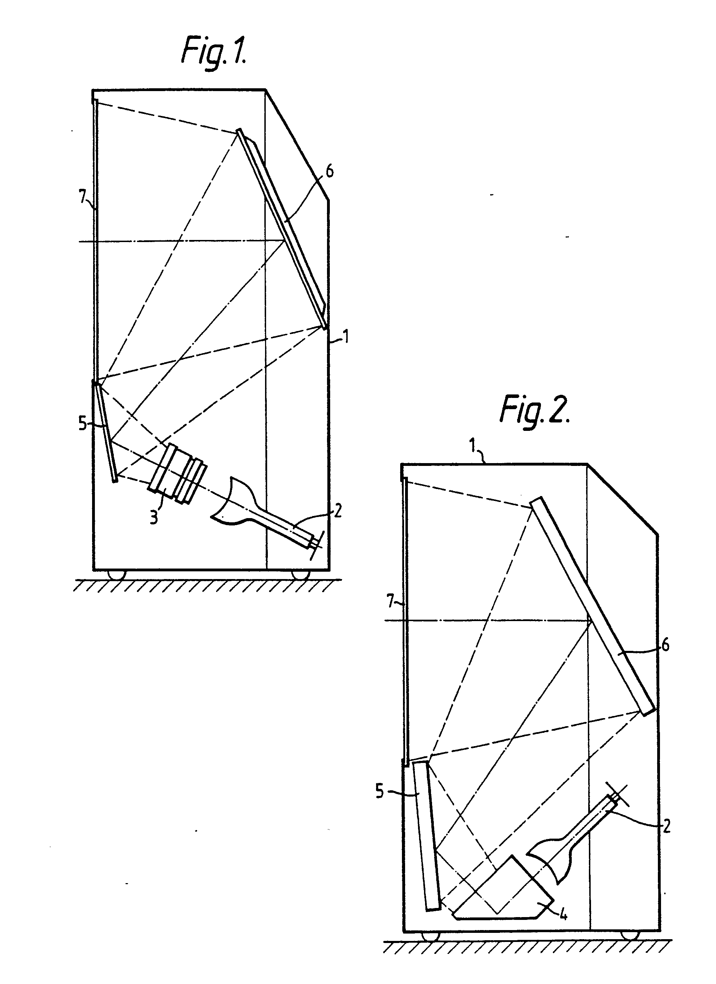

Referring to Figures 1 and 2, a free standing cabinet 1 contains a back projection television display system comprising a cathode ray tube (CRT) 2 having a face plate concave towards, a projection lens 3 or 4, front metallised folding mirrors 5 and 6 and a translucent projection screen 7. The screen may be a Fresnel screen and may also have a light scattering power which is less in the vertical plane than in the horizontal plane to avoid wasting projected light. In Figure 2, the projection lens 4 is folded, there being a folding mirror between two adjacent elements of the lens. For colour television, three CRTs and three lenses are used in line normal to the plane of the drawing. Mirrors 5 and 6 are then extended in the direction normal to the drawing to accept light from all three CRTs. The outermost CRTs and lenses are inclined inwards so that the projected red, blue and green rasters are brought into coincidence on the screen 7.

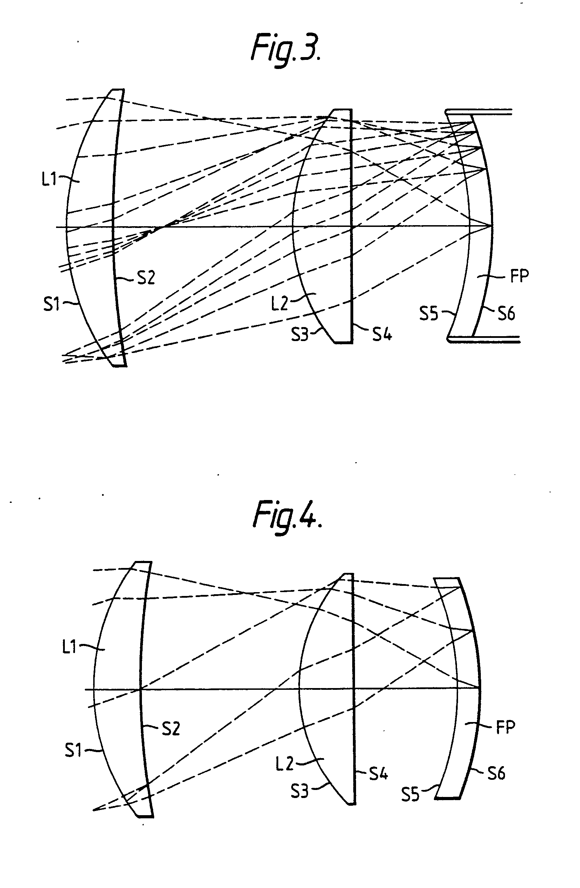

The projection lens 3 or 4 for such a television display screen can be realised by using only two lens elements each having one aspheric surface. Such a lens has adequate quality for 525 line or 625 line television. The Petzval curvature of the lens fits the concave CRT face plate closely, removing the need for a field flattener. Figures 3 and 4 show two designs having different projection angles measured across the picture diagonal. The lens elements are designated by L followed by a numeral indicating the sequential position of the element from the image of projection screen and to the CRT face plate FP. The surfaces of the elements are designated by S followed by a numeral in the same sequence as the elements. Positive surfaces are convex towards the projection screen and negative surfaces are concave towards the projection screen.

The powers of the two elements are within the ranges given by:—

$$0.4K < K_1 < 0.60K \text{ and}$$
$$0.75K < K_2 < 1.05K$$

where K is the power of the whole lens equal to the reciprocal of its focal length and $K_1$ and $K_2$ are the powers of the two elements equal to the reciprocal of their respective focal lengths, both elements being of positive power and being generally convex towards the projection screen. Both elements correct for aperture dependent aberrations as well as providing some of the overall positive power of the lens. Both elements have one aspheric surface for detailed aberration correction. Surfaces S2 and S4 are aspherized in both designs. The aspheric surfaces are defined by the expression

$$Z = \frac{Cs^2}{1 + \sqrt{1 - \varepsilon C^2 s^2}} + a_4 s^4 + a_6 s^6 + a_8 s^8 + a_{10} s^{10}$$

where Z is the deviation, in the axial direction, of the surface from a plane normal to the optic axis and tangent to the surface at its pole for a zone of the surface which is at a distance s from the axis, C is the curvature of the surface at the pole, $\varepsilon$ is a conic constant and $a_4$, $a_6$, $a_8$ and $a_{10}$ are constants for the surface. The first term of Z defines the basic shape of the whole surface. If $\varepsilon$ has the value 1, the basic shape is a sphere. For parabolic, ellipsoidal or hyperbolic basic shapes $\varepsilon$ has the values 0, between 0 and 1 or less than 0 respectively.

The following Tables I and II give the detailed design of the embodiments of Figures 3 and 4 respectively.

TABLE I

| Focal length 14.0 cm. | Relative aperture f/0.94 |
| Projection angle ±23.7°. | Throw 1.3m. |
| Wavelength 525nm. | Magnification 9X. |

|    |    | Polar radius, cm | Axial thickness, cm | Axial separation, cm | Refractive index |
|----|----|----|----|----|----|
| L1 | S1 | 12.603 | ----- | ----- | ---- |
|    | S2 | 70.920 | 2.500 | ----- | 1.5756 |
| L2 | S3 | 10.005 | ----- | 9.763 | ---- |
|    | S4 | -77.270 | 3.227 | ----- | 1.5756 |
| FP | S5 | -15.015 | ----- | 6.343 | ---- |
|    | S6 | -15.748 | 1.200 | ----- | 1.5200 |

Aspheric surfaces: S2, S4

|    | S2 | S4 |
|----|----|----|
| $c$ | 0.0141 | -0.0129 |
| $\varepsilon$ | 0 | 0 |
| $a_4$ | $+0.7023 \times 10^{-4}$ | $+0.1526 \times 10^{-3}$ |
| $a_6$ | $-0.1330 \times 10^{-7}$ | $-0.1411 \times 10^{-6}$ |
| $a_8$ | $+0.7157 \times 10^{-10}$ | $-0.1822 \times 10^{-7}$ |
| $a_{10}$ | $+0.2866 \times 10^{-11}$ | $+0.1406 \times 10^{-9}$ |

Element values:

|    | Focal length, cm | Power, $cm^{-1}$ | Relative Power |
|----|----|----|----|
| L1 + L2 | 14.045 | 0.0712 | 1 |
| L1 | 26.216 | 0.0381 | 0.54 |
| L2 | 15.600 | 0.0641 | 0.90 |

TABLE II

Focal length 12.821 cm.  Relative aperture f/0.94

Projection angle ±25.7°.  Throw 1.19m

Wavelength 525nm.  Magnification 9X.

|  |  | Polar radius, cm | Axial thickness, cm | Axial separation, cm | Refractive index |
|---|---|---|---|---|---|
| L1 | S1 | 10.853 | ----- | ----- | ----- |
|  | S2 | 45.996 | 2.500 | ----- | 1.5756 |
| L2 | S3 | 8.839 | ----- | 8.704 | ---- |
|  | S4 | -88.028 | 2.911 | ----- | 1.5756 |
| FP | S5 | -13.699 | ----- | 5.687 | ---- |
|  | S6 | -15.016 | 1.200 | ----- | 1.5200 |

Aspheric surfaces: S2, S4

|  | S2 | S4 |
|---|---|---|
| c | 0.0217 | -0.0114 |
| $\varepsilon$ | 0 | 0 |
| $a_4$ | $+0.1021 \times 10^{-3}$ | $+0.2400 \times 10^{-3}$ |
| $a_6$ | $+0.3952 \times 10^{-7}$ | $-0.1089 \times 10^{-5}$ |
| $a_8$ | $+0.3938 \times 10^{-9}$ | $-0.2332 \times 10^{-7}$ |
| $a_{10}$ | $+0.8644 \times 10^{-11}$ | $+0.3722 \times 10^{-9}$ |

Element values:

|  | Focal length, cm | Power, $cm^{-1}$ | Relative Power |
|---|---|---|---|
| L1 + L2 | 12.821 | 0.0780 | 1 |
| L1 | 24.054 | 0.0416 | 0.53 |
| L2 | 14.110 | 0.0709 | 0.91 |

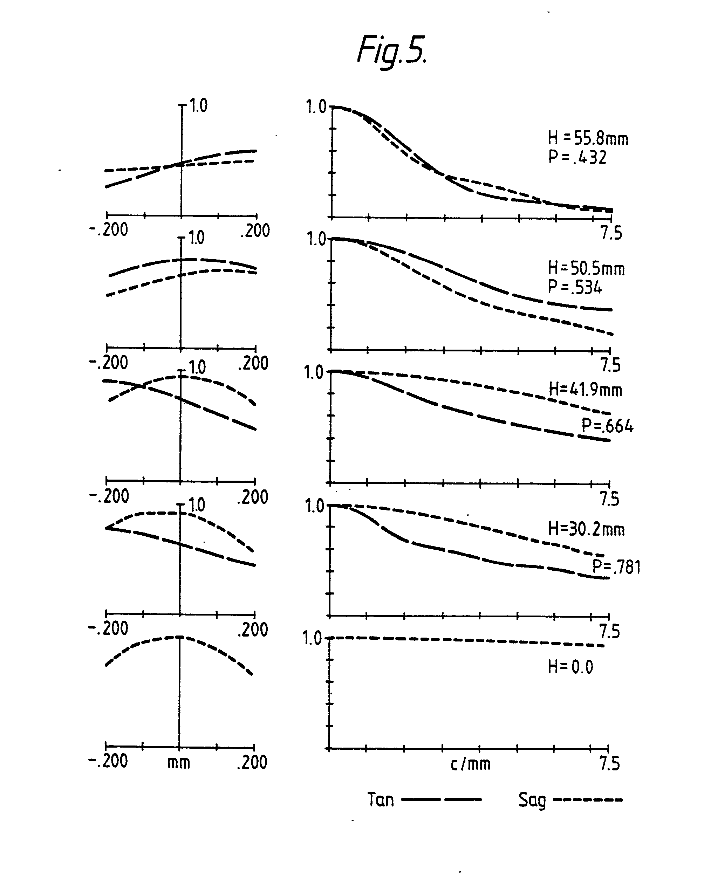

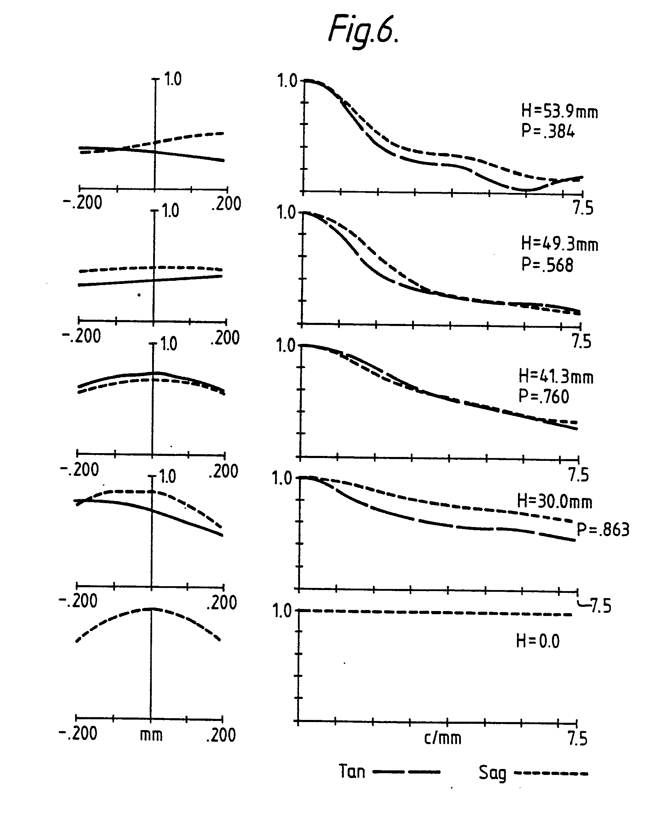

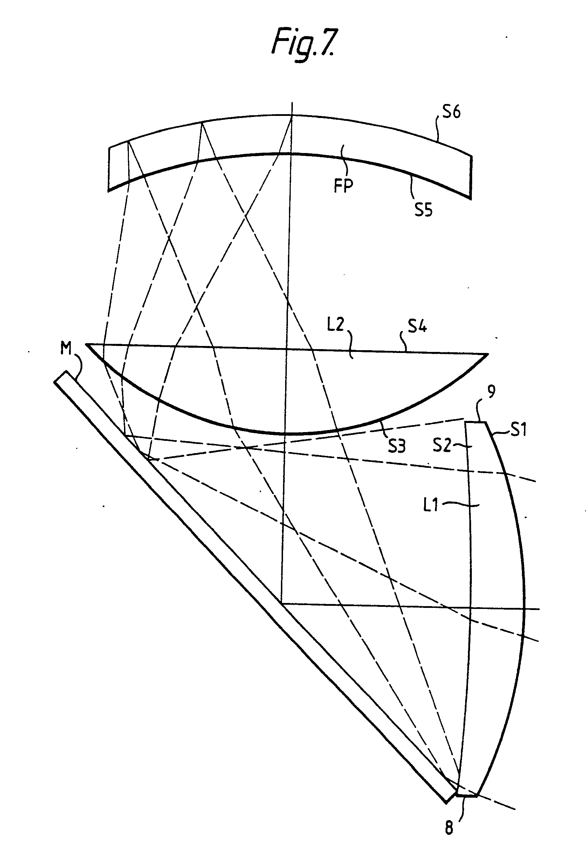

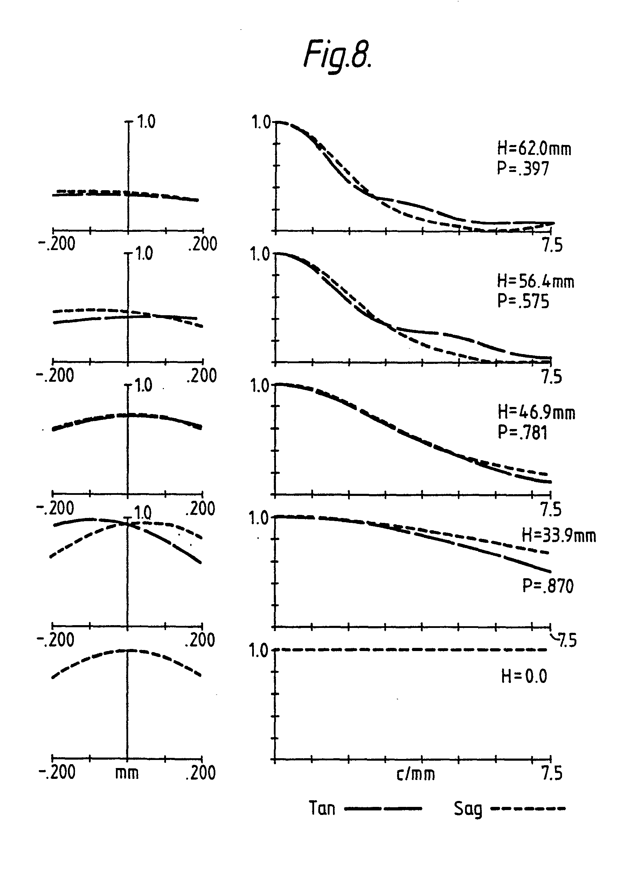

Figures 5 and 6 show the performance of the lenses of Figures 3 and 4 respectively. The column of five graphs on the right show the modulation transfer functions (MTF) plotted vertically at various distances H off axis at the CRT face plate as a function of spatial frequency for the trangential (Tan) and sagital (Sag) directions. For each value of H the value of the effective lens aperture area P is given relative to the value on axis. The MFTs are plotted out to 7.5 cycles per mm on the CRT face plate. With a face plate diameter of 120 mm, a 625 line picture can be adequately resolved provided the MTF has a value 0.5 or better out to 2.5 cycles per mm. It will be seen that the Figure 3 design achieves this target all over the picture with a substantial margin in most of the picture. The wider angle, shorter throw design of Figure 4 has slightly lower resolution at the picture extremities. H = 55 mm is roughly at the picture corners.

The column of five graphs on the left show the variation of the MTF as a function of defocus distance at the CRT face plate. The base value of the MTF is 2.5 cycles per mm. It will be seen that there is a substantial margin of about ± 0.2 mm for defocus error and for face plate manufacturing tolerance.

Figure 7 shows a design of lens in which the separation between L1 and L2 has been increased to allow a folding mirror M to be inserted at an angle of 45 degrees between them. In practice a small segment is removed from the top 8 and bottom 9 of L1. The effect of the increased separation is to reduce the projection angle slightly and to increase the throw needed to give the same final size of picture as with the Figure 3 and Figure 4 designs.

Table III gives the details of this design.

### TABLE III

| Focal length 16.835 cm. | Relative aperture f/1.0 |
|---|---|
| Projection angle ±22.5°. | Throw 1.37m. |
| Wavelength 525nm. | Magnification 9X. |

| | | Polar radius, cm | Axial thickness, cm | Axial separation, cm | Refractive index |
|---|---|---|---|---|---|
| L1 | S1 | 16.148 | ----- | ----- | ---- |
| | S2 | 138.646 | 2.128 | ----- | 1.5727 |
| L2 | S3 | 10.818 | ----- | 13.664 | ---- |
| | S4 | -103.670 | 3.248 | ----- | 1.5727 |
| FP | S5 | -15.873 | ----- | 7.525 | ---- |
| | S6 | -17.857 | 1.500 | ----- | 1.5200 |

Aspheric surfaces: S2, S4

| | S2 | S4 |
|---|---|---|
| c | 0.00721 | -0.00965 |
| $\varepsilon$ | 0 | 0 |
| $a_4$ | $+0.3477 \times 10^{-4}$ | $+0.9328 \times 10^{-4}$ |
| $a_6$ | $-0.4888 \times 10^{-8}$ | $-0.5375 \times 10^{-6}$ |
| $a_8$ | $+0.4453 \times 10^{-10}$ | $+0.3432 \times 10^{-8}$ |
| $a_{10}$ | 0 | 0 |

Element values:

| | Focal length, cm | Power, cm$^{-1}$ | Relative Power |
|---|---|---|---|
| L1 + L2 | 16.832 | 0.0594 | 1 |
| L1 | 31.712 | 0.0315 | 0.53 |
| L2 | 17.284 | 0.0579 | 0.97 |

It will be seen from Figure 8 that the performance of this design is only slightly lower than that of the Figure 3 and Figure 4 designs at the edges of the picture.

In the above designs, the aspheric can be on either side of each element. The CRT face plate can have concentric surfaces or each surface can have the same radius or slightly different radii consistent with the face plate thickness remaining substantially constant or chosen so that the face plate has weak positive or negative power. Either face plate surface may be aspherized to further improve resolution.

For three element lens designs generally suitable for higher definition or wider projection angle reference may be made to copending Patent Application 8,319,940.

To facilitate comparison of the three examples of lens designs in accordance with the invention given above with other lenses, the following scaling rules are given. Assuming it is desired to change the focal length by a factor N, all the surface radii, axial thicknesses and axial separations should be multiplied by N. In the aspheric Z formula, the C on the top line of the first term is divided by N, $C^2$ on the bottom line of the first term is unchanged, $a_4$ is multiplied by $N^3$, $a_6$ is multiplied by $N^5$, $a_8$ is multiplied by $N^7$ and $a_{10}$ is multiplied by $N^9$. This enables comparison to be made with any two element projection lens design whether its focal length has been normalised or not. Thus, to compare a given lens with a lens according to one of the three examples above, the factor N is formed by dividing the given lens focal length by the chosen example focal length.

## Claims

1. A lens system for projecting an image of a concave objective onto a planar display screen, the radius of the concave object surface being approximately equal to the focal length of the lens system, characterised in that the projection lens comprises two elements, each of positive power and each having one aspheric surface, the element nearest the screen having meniscus shape and the other element having substantially plano-convex shape, the shorter radius surfaces of each element facing the screen, the powers of the elements being chosen so that

$$0.4K < K_1 < 0.60K \text{ and}$$
$$0.75K < K_2 < 1.05K$$

where $K_1$ is the power of the element remote from the object surface, $K_2$ is the power of the element adjacent the object surface and K is the total power of the projection lens, the ratio of the axial separation of the elements to the lens system focal length being in the range 0.67 to 0.81.

2. A lens system as claimed in Claim 1 of focal length 14.045 cm at a wavelength of 525 mm, relative aperture f/0.94, projection angle ± 23.7°, throw 1.3 m and magnification 9X, described substantially as follows:

|   |    | Polar radius, cm | Axial thickness, cm | Axial separation, cm | Refractive index |
|---|----|------------------|---------------------|----------------------|------------------|
| L1 | S1 | 12.603 | ----- | ----- | ---- |
|    | S2 | 70.920 | 2.500 | ----- | 1.5756 |
| L2 | S3 | 10.005 | ----- | 9.763 | ---- |
|    | S4 | -77.270 | 3.227 | ----- | 1.5756 |
| FP | S5 | -15.015 | ----- | 6.343 | ---- |
|    | S6 | -15.748 | 1.200 | ----- | 1.5200 |

Aspheric surfaces: S2, S4

|  | | S2 | S4 |
|---|---|---|---|
| | c | 0.0141 | -0.0129 |
| | $\varepsilon$ | 0 | 0 |
| | $a_4$ | $+0.7023 \times 10^{-4}$ | $+0.1526 \times 10^{-3}$ |
| | $a_6$ | $-0.1330 \times 10^{-7}$ | $-0.1411 \times 10^{-6}$ |
| | $a_8$ | $+0.7157 \times 10^{-10}$ | $-0.1822 \times 10^{-7}$ |
| | $a_{10}$ | $+0.2866 \times 10^{-11}$ | $+0.1406 \times 10^{-9}$ |

Element values:

| | Focal length, cm | Power, $cm^{-1}$ | Relative Power |
|---|---|---|---|
| L1 + L2 | 14.045 | 0.0712 | 1 |
| L1 | 26.216 | 0.0381 | 0.54 |
| L2 | 15.600 | 0.0641 | 0.90 |

where L1, L2, FP are successive lens elements from the image end and S1—S6 are successive element surfaces, positive surfaces being convex towards the image end and negative surfaces being concave towards the image end.

3. A lens system as claimed in Claim 1 of focal length 12.821 cm at a wavelength of 525 nm, relative aperture f/0.94, projection angle ± 25.7°, throw 1.19 m and magnification 9X, described substantially as follows:

| | | Polar radius, cm | Axial thickness, cm | Axial separation, cm | Refractive index |
|---|---|---|---|---|---|
| L1 | S1 | 10.853 | ----- | ----- | ----- |
| | S2 | 45.996 | 2.500 | ----- | 1.5756 |
| L2 | S3 | 8.839 | ----- | 8.704 | ----- |
| | S4 | -88.028 | 2.911 | ----- | 1.5756 |
| FP | S5 | -13.699 | ----- | 5.687 | ----- |
| | S6 | -15.016 | 1.200 | ----- | 1.5200 |

Aspheric surfaces: S2, S4

| | | S2 | S4 |
|---|---|---|---|
| | c | 0.0217 | −0.0114 |
| | $\varepsilon$ | 0 | 0 |
| | $a_4$ | $+0.1021 \times 10^{-3}$ | $+0.2400 \times 10^{-3}$ |
| | $a_6$ | $+0.3952 \times 10^{-7}$ | $-0.1089 \times 10^{-5}$ |
| | $a_8$ | $+0.3938 \times 10^{-9}$ | $-0.2332 \times 10^{-7}$ |
| | $a_{10}$ | $+0.8644 \times 10^{-11}$ | $+0.3722 \times 10^{-9}$ |

Element values:

| | Focal length, cm | Power, $cm^{-1}$ | Relative Power |
|---|---|---|---|
| L1 + L2 | 12.821 | 0.0780 | 1 |
| L1 | 24.054 | 0.0416 | 0.53 |
| L2 | 14.110 | 0.0709 | 0.91 |

where L1, L2, FP are successive lens elements from the image end and S1—S6 are successive element surfaces, positive surfaces being convex towards the image end and negative surfaces being concave towards the image end.

4. A lens system as claimed in Claim 1 of focal length 16.835 cm at a wavelength of 525 nm, relative aperture f/1.0, projection angle ± 22.5°, throw 1.37 m and magnification 9X, described substantially as follows:

| | | Polar radius, cm | Axial thickness, cm | Axial separation, cm | Refractive index |
|---|---|---|---|---|---|
| L1 | S1 | 16.148 | ----- | ----- | ---- |
| | S2 | 138.646 | 2.128 | ----- | 1.5727 |
| L2 | S3 | 10.818 | ----- | 13.664 | ---- |
| | S4 | −103.670 | 3.248 | ----- | 1.5727 |
| FP | S5 | −15.873 | ----- | 7.525 | ---- |
| | S6 | −17.857 | 1.500 | ----- | 1.5200 |

# EP 0 135 215 B1

Aspheric surfaces: S2, S4

| | | S2 | S4 |
|---|---|---|---|
| | c | 0.00721 | −0.00965 |
| | $\varepsilon$ | 0 | 0 |
| | $a_4$ | $+0.3477 \times 10^{-4}$ | $+0.9328 \times 10^{-4}$ |
| | $a_6$ | $-0.4888 \times 10^{-8}$ | $-0.5375 \times 10^{-6}$ |
| | $a_8$ | $+0.4453 \times 10^{-10}$ | $+0.3432 \times 10^{-8}$ |
| | $a_{10}$ | 0 | 0 |

Element values:

| | Focal length, cm | Power, $cm^{-1}$ | Relative Power |
|---|---|---|---|
| L1 + L2 | 16.832 | 0.0594 | 1 |
| L1 | 31.712 | 0.0315 | 0.53 |
| L2 | 17.284 | 0.0579 | 0.97 |

where L1, L2, FP are successive lens elements from the image end and S1—S6 are successive element surfaces positive surfaces being convex towards the image end and negative surfaces being concave towards the image end.

5. A lens system as claimed in any one of Claim 1 or Claim 4 characterised in that the lens system is folded by a plane mirror inserted between the two transmissive elements at angle to the optical axis.

·6. A projection television system comprising a cathode ray tube having a face plate concave towards the direction of the projected image and a lens system as claimed in any one of Claims 1 to 5.

7. A colour television projection system comprising first, second and third cathode ray tubes having red, blue and green phosphors respectively provided on concave face plates, a lens system associated with each cathode ray tube, each lens system being arranged to project an image of the concave face plate onto a common display screen characterised in that the lens system are as claimed in any one of Claims 1 to 5.

## Patentansprüche

1. Linsensysteem zum Projizieren eines Bildes einer konkaven Objektoberfläche auf einen Planar-Wiedergabeschirm, wobei der Radius der konkaven Objektoberfläche ungefähr gleich der Brennweite des Linsensystems ist, dadurch gekennzeichnet, daß die Projektionslinse zwei Elemente mit je positiver Stärke und je einer asphärischen Fläche enthält, wobei das dem Schirm am nächsten befindliche Element eine Meniskusform und das andere Element im wesentlichen eine plankonvexe Form haben, die Flächen mit kürzerem Radius jedes Elements dem Schirm zugewandt sind, die Brechzahlen der Elemente derart gweählt werden, daß

$$0,4K < K_1 < 0,60K \text{ und}$$
$$0,75L < K_2 < 1,05K \text{ sind,}$$

worin $K_1$ die Stärke des von der Objektoberfläche weiter entfernten Elements, $K_2$ die Stärke des nahe bei der Objektoberfläche liegenden Elements und K die Gesamt-Brechzahl der Projektionslinse ist, wobei das Verhältnis der axialen Trennung der Elemente zur Brennweite des Linsensystems im Bereich zwischen 0,67 und 0,81 liegt.

2. Linsensystem nach Anspruch 1 mit Brennweite 14,045 cm bei einer Wellenlänge von 525 nm, einer relativen Öffnung f/0,94, einem Projektionswinkel von etwa 23,7°, einer Projektionsentfernung von 1,3 m und einer Vergrößerung von 9x, im wesentlichen nach folgender Beschreibung:

| | Radius cm | Axialdicke cm | Axialtrennung cm | Brechungsindex |
|---|---|---|---|---|
| S1 | 12,603 | ----- | ----- | ------ |
| L1 | | | | |
| S2 | 70,920 | 2,500 | ----- | 1,5756 |
| S3 | 10,005 | ----- | 9,763 | ------ |
| L2 | | | | |
| S4 | -77,270 | 3,227 | ----- | 1,5756 |
| S5 | -15,015 | ----- | 6,343 | ------ |
| FP | | | | |
| S6 | -15,748 | 1,200 | ----- | 1,5200 |

Asphärische Oberflächen: S2, S4

| | S2 | S4 |
|---|---|---|
| c | 0,0141 | -0,0129 |
| $\varepsilon$ | 0 | 0 |
| $a_4$ | $+0,7023 \times 10^{-4}$ | $+0,1526 \times 10^{-3}$ |
| $a_6$ | $-0,1330 \times 10^{-7}$ | $-0,1411 \times 10^{-6}$ |
| $a_8$ | $+0,7157 \times 10^{-10}$ | $-0,1822 \times 10^{-7}$ |
| $a_{10}$ | $+0,2866 \times 10^{-11}$ | $+0,1406 \times 10^{-9}$ |

Elementwerte:

| | Brennweite, cm | Stärke, $cm^{-1}$ | relative Stärke |
|---|---|---|---|
| L1 + L2 | 14,045 | 0,0712 | 1 |
| L1 | 26,216 | 0,0381 | 0,54 |
| L2 | 15,600 | 0,0641 | 0,90 |

worin L1, L2 und FP aufeinanderfolgende Linsenelemente von der Bildseite her und S1...S6 aufeinanderfolgende Elementoberflächen sind, wobei positive Oberflächen zur Bildseite hin konvex und negative Oberflächen zur Bildseite hin konkav sind.

worin L1, L2 und FP aufeinanderfolgende Linsenelemente von der Bildseite her und S1 . . . S6 aufeinanderfolgende Elementoberflächen sind, wobei positive Oberflächen zur Bildseite hin konvex und negative Oberflächen zur Bildseite hin konkav sind.

3. Linsensystem nach Anspruch 1 mit Brennweite 12,821 cm bei einer Wellenlänge von 525 nm, einer

11

relativen Öffnung f/0,94, einem Projektionswinkel von etwa 25,7°, einer Projektionsentfernung von 1,9 m und einer Vergräßerung von 9x, im wesentlichen nach folgender Beschreibung:

| | Radius cm | Axialdicke cm | Axialtrennung cm | Brechungsindex |
|---|---|---|---|---|
| S1 | 10,853 | ----- | ----- | ------ |
| L1 | | | | |
| S2 | 45,996 | 2,500 | ----- | 1,5756 |
| S3 | 8,839 | ----- | 8,704 | ------ |
| L2 | | | | |
| S4 | -88,028 | 2,911 | ----- | 1,5756 |
| S5 | -13,699 | ----- | 5,687 | ------ |
| FP | | | | |
| S6 | -15,016 | 1,200 | ----- | 1,5200 |

Asphärische Oberflächen: S2, S4

| | S2 | S4 |
|---|---|---|
| $c$ | 0,0217 | -0,0114 |
| $\varepsilon$ | 0 | 0 |
| $a_4$ | $+0,1021 \times 10^{-3}$ | $+0,2400 \times 10^{-3}$ |
| $a_6$ | $-0,3952 \times 10^{-7}$ | $-0,1089 \times 10^{-5}$ |
| $a_8$ | $+0,3938 \times 10^{-9}$ | $-0,2332 \times 10^{-7}$ |
| $a_{10}$ | $+0,8644 \times 10^{-11}$ | $+0,3722 \times 10^{-9}$ |

Elementwerte:

| | Brennweite, cm | Stärke, $cm^{-1}$ | relative Stärke |
|---|---|---|---|
| L1 + L2 | 12,821 | 0,0780 | 1 |
| L1 | 24,054 | 0,0416 | 0,53 |
| L2 | 14,110 | 0,0709 | 0,91 |

worin L1, L2 und FP aufeinanderfolgende Linsenelemente von der Bildseite her und S1 . . . S6 aufeinanderfolgende Elementoberflächen sind, wobei positive Oberflächen zur Bildseite hin konvex und negative Oberflächen zur Bildseite hin konkav sind.

4. Linsensystem nach Anspruch 1 mit Brennweite 16,835 cm bei einer Wellenlänge von 525 nm, einer relativen Öffnung f/1,0, einem Projektionswinkel von etwa 22,5°, einer Projektionsentfernung von 1,37 m und einer Vergräßerung von 9x, im wesentlichen nach folgender Beschreibung:

| | Radius cm | Axialdicke cm | Axialtrennung cm | Brechungsindex |
|---|---|---|---|---|
| S1 | 16,148 | ----- | ----- | ------ |
| L1 | | | | |
| S2 | 138,646 | 2,128 | ----- | 1,5727 |
| S3 | 10,818 | ----- | 13,664 | ------ |
| L2 | | | | |
| S4 | -103,670 | 3,248 | ----- | 1,5727 |
| S5 | -15,873 | ----- | 7,525 | ------ |
| FP | | | | |
| S6 | -17,857 | 1,500 | ----- | 1,5200 |

Asphärische Oberflächen: S2, S4

| | S2 | S4 |
|---|---|---|
| $c$ | 0,00721 | -0,00965 |
| $\varepsilon$ | 0 | 0 |
| $a_4$ | $+0,3477 \times 10^{-4}$ | $+0,9328 \times 10^{-4}$ |
| $a_6$ | $-0,4888 \times 10^{-8}$ | $-0,5375 \times 10^{-6}$ |
| $a_8$ | $+0,4453 \times 10^{-10}$ | $-0,3432 \times 10^{-8}$ |
| $a_{10}$ | 0 | 0 |

Elementwerte:

| | Brennweite, cm | Stärke, $cm^{-1}$ | relative Stärke |
|---|---|---|---|
| L1 + L2 | 16,832 | 0,0594 | 1 |
| L1 | 31,712 | 0,0315 | 0,53 |
| L2 | 17,284 | 0,0579 | 0,97 |

worin L1, L2 und FP aufeinanderfolgende Linsenelemente von der Bildseite her und S1 . . . S6 aufeinanderfolgende Elementoberflächen sind, wobei positive Oberflächen zur Bildseite hin konvex und negative Oberflächen zur Bildseite hin konkav sind.

5. Linsensystem nach einem der Ansprüche 1 oder 4, dadurch gekennzeichnet, daß das Linsensystem durch einem flachen Spiegel zwischen den beiden Linsenelementen unter einem Winkel mit der optischen Achse gefaltet ist.

6. Projektionsfernsehsystem mit einer Kathodenstrahlröhre, die eine in Richtung der Bildprojektion konkave Frontplatte enthält, und mit einem Linsensystem mach einem der Ansprüche 1 bis 5.

7. Farbfernsehprojektionssystem mit ersten, zweiten und dritten Kathodenstrahlröhren, die rote, blaue und grüne Leuchtstoffe auf je einer konkaven Frontplatte enthalten, mit einem linsensystem für jede Kathodenstrahlröhre wobei jedes Linsensystem zum Projizieren eines Bildes der konkaven Frontplatte auf einen gemeinsamen Wiedergabeschirm angeordnet ist, dadurch gekennzeichnet, daß die Linsensysteme gestaltet sind wie in einem oder mehreren der Ansprüche 1 bis 5 beansprucht.

**Revendications**

1. Système de lentilles pour la projection d'une image d'une surface d'objet concave sur un écran de reproduction planaire, le rayon de courbure de la surface d'objet concave étant pratiquement égal à la distance focale du système de lentilles, caractérisé en ce que la lentille de projection comprend deux éléments, chacun de puissance positive, présentant chacun une surface asphérique, l'élément situé le plus près de l'écran présentant une forme de ménisque et l'autre élément présentant une forme plan-convexe, les surfaces à plus court rayon de courbure de chaque élément étant situées en vis-à-vis de l'écran, les puissances de éléments étant choisies de façon que

$$0,4K < K_1 < 0,60K \text{ et}$$
$$0,75L < K_2 < 1,05K$$

$K_1$ étant la puissance de l'élément opposé à la surface d'objet, $K_2$ étant la puissance de l'élément adjacent de la surface d'objet et K étant la puissance totale de la lentille de projection, le rapport entre l'espacement axial de éléments et la distance focale du système de lentilles étant compris entre 0,67 et 0,81.

2. Système de lentilles selon la revendication 1 présentant une distance focale de 14,045 cm à une longueur d'onde de 525 nm, une ouverture relative f/0,94, un angle de projection d'environ 23,7°, une distance de projection de 1,3 m et un grossissement de 9X, décrit comme suit:

| | | Rayon de courbure cm | Epaisseur axiale cm | Espacement axial cm | Indice de réfraction |
|---|---|---|---|---|---|
| | S1 | 12,603 | ___ | ___ | ___ |
| L1 | | | | | |
| | S2 | 70,920 | 2,500 | ___ | 1,5756 |
| | S3 | 10,005 | ___ | 9,763 | ___ |
| L2 | | | | | |
| | S4 | -77,270 | 3,227 | ___ | 1,5756 |
| | S5 | -15,015 | ___ | 6,343 | ___ |
| FP | | | | | |
| | S6 | -15,748 | 1,200 | ___ | 1,5200 |

Des surfaces asphériques: S2, S4

14

|        | S2 | S4 |
|--------|----|----|
| c      | 0,0141 | -0,0129 |
| ε      | 0 | 0 |
| $a_4$  | $+0,7023 \times 10^{-4}$ | $+0,1526 \times 10^{-3}$ |
| $a_6$  | $-0,1330 \times 10^{-7}$ | $-0,1411 \times 10^{-6}$ |
| $a_8$  | $+0,7157 \times 10^{-10}$ | $-0,1822 \times 10^{-7}$ |
| $a_{10}$ | $+0,2866 \times 10^{-11}$ | $+0,1406 \times 10^{-9}$ |

Des valeurs d'éléments:

|          | Distance focale, cm | Puissance, $cm^{-1}$ | Puissance relative |
|----------|---------------------|----------------------|--------------------|
| L1 + L2  | 14,045 | 0,0712 | 1 |
| L1       | 26,216 | 0,0381 | 0,54 |
| L2       | 15,600 | 0,0641 | 0,90 |

L1, L2, FP étant des éléments de lentille successifs à partir de l'extrémité image et S1—S6 étant de surfaces d'éléments successives, les surfaces positives étant convexes vers l'extrémité image et les surfaces négatives étant concaves vers l'extrémité image.

3. Système de lentilles selon la revendication 1 présentant une distance focale de 12,821 cm à une longueur d'onde de 525 nm, une ouverture relative f/0,94, un angle de projection d'environ 25,7°, une distance de projection de 1,19 m et un grossissement de 9X, décrit comme suit:

|      |      | Rayon de courbure cm | Épaisseur axiale cm | Espacement axial cm | Indice de réfraction |
|------|------|----------------------|---------------------|---------------------|----------------------|
|      | S1   | 10,853 | —— | —— | —— |
| L1   |      |        |    |    |    |
|      | S2   | 45,996 | 2,500 | —— | 1,5756 |
|      | S3   | 8,839 |  | 8,704 | —— |
| L2   |      |       |  |       |    |
|      | S4   | -88,028 | 2,911 | —— | 1,5756 |
|      | S5   | -13.699 | —— | 5,687 | —— |
| FP   |      |        |    |       |    |
|      | S6   | -15.016 | 1,200 | —— | 1,5200 |

Des surfaces asphériques S2, S4

|  | S2 | S4 |
|---|---|---|
| C | 0,0217 | -0.0114 |
| $\varepsilon$ | 0 | 0 |
| $a_4$ | $+0,1021 \times 10^{-3}$ | $+0,2400 \times 10^{-3}$ |
| $a_6$ | $+0,3952 \times 10^{-7}$ | $-0,1089 \times 10^{-5}$ |
| $a_8$ | $+0,3938 \times 10^{-9}$ | $-0,2332 \times 10^{-7}$ |
| $a_{10}$ | $+0,8644 \times 10^{-11}$ | $+0,3722 \times 10^{-9}$ |

Des valeurs d'éléments:

|  | Distance focale, cm | Puissance, $cm^{-1}$ | Puissance relative |
|---|---|---|---|
| L1 + L2 | 12,821 | 0,0780 | 1 |
| L1 | 24,054 | 0,0416 | 0,53 |
| L2 | 14,110 | 0,0709 | 0,91 |

L1, L2, FP étant des éléments de lentille successifs à partir de l'extrémité image et S1—S6 sont des surfaces d'éléments successives, les surfaces positives étant convexes vers l'extrémité image et les surfaces négatives étant concaves vers l'extrémité image.

4. Système de lentilles selon la revendication 1 présentant une distance focale de 16,835 cm à une longueur d'onde de 525 nm, une ouverture relative f/1,0, un angle de projection d'environ 22,5°, une distance de projection de 1,37 m et un grossissement de 9X, décrit comme suit:

|  |  | Rayon de courbure cm | Épaisseur axiale cm | Espacement axial cm | Indice de réfraction |
|---|---|---|---|---|---|
|  | S1 | 16,148 | —— | —— | —— |
| L1 |  |  |  |  |  |
|  | S2 | 138,646 | 2,128 | —— | 1,5727 |
|  | S3 | 10,818 | —— | 13,664 | —— |
| L2 |  |  |  |  |  |
|  | S4 | -103,670 | 3,248 | —— | 1,5727 |
|  | S5 | -15,873 | —— | 7,525 | —— |
| FP |  |  |  |  |  |
|  | S6 | -17,857 | 1,500 | —— | 1,5200 |

Des surfaces asphériques S2, S4

|  | S2 | S4 |
|---|---|---|
| C | 0,00721 | -0,0965 |
| $\varepsilon$ | 0 | 0 |
| $a_4$ | $+0,3477 \times 10^{-4}$ | $+0,9328 \times 10^{-4}$ |
| $a_6$ | $-0,4888 \times 10^{-8}$ | $-0,5375 \times 10^{-6}$ |
| $a_8$ | $+0,4453 \times 10^{-10}$ | $+0,3432 \times 10^{-8}$ |
| $a_{10}$ | 0 | 0 |

Des valeurs d'éléments:

|  | Distance focale, cm | Puissance, $cm^{-1}$ | Puissance relative |
|---|---|---|---|
| L1 + L2 | 16,832 | 0,0594 | 1 |
| L1 | 31,712 | 0,0315 | 0,53 |
| L2 | 17,284 | 0,0579 | 0,97 |

L1, L2, FP étant des éléments de lentille successifs à partir de l'extrémité image et S1—S6 sont des surfaces d'éléments successives, les surfaces positives étant convexes vers l'extrémité image et les surfaces négatives étant concaves vers l'extrémité image.

5. Système de lentilles selon l'une des revendications 1 et 4, caractérisé en ce que le système de lentilles est plié par un réflecteur plan inséré entre les deux éléments de transmission, formant un angle avec l'axe optique.

6. Système de télévision par projection comportant un tube à rayons cathodiques présentant une fenêtre image qui est concave dans la direction de l'image projetée et système de lentilles selon l'une des revendications 1 à 5.

7. Système de télévision par projection couleur comprenant des premier, deuxième et troisième tubes à rayons cathodiques présentant des luminophores rouges, bleus et verts appliquées respectivement sur des fenêtres image concaves, un système de lentilles correspondant à chaque tube à rayons cathodiques, chaque système de lentilles étant disposé de façon à projeter l'image de la fenêtre image concave sur un écran de reproduction commun, caractérisé en ce que les systèmes de lentilles sont comme revendiqués dans l'une des revendications 1 à 5.

*Fig.1.*

*Fig.2.*

## Fig.3.

## Fig.4.

EP 0 135 215 B1

## Fig.5.

H = 55.8mm
P = .432

H = 50.5mm
P = .534

H = 41.9mm

P = .664

H = 30.2mm

P = .781

H = 0.0

Tan ——— Sag ------

## Fig.6.

H=53.9mm
P=.384

H=49.3mm
P=.568

H=41.3mm
P=.760

H=30.0mm

P=.863

H=0.0

Tan ———— Sag --------

# Fig.7.

# Fig.8.

H=62.0mm
P=.397

H=56.4mm
P=.575

H=46.9mm
P=.781

H=33.9mm

P=.870

H=0.0

Tan ——— Sag ----